# NEW EUROPEAN PATENT SPECIFICATION

(11) **EP 0 159 762 B2**
(45) Date of publication and mention of the opposition decision: **27.03.1996**
(45) Mention of the grant of the patent: 04.09.1991
(21) Application number: 85200626.1
(22) Date of filing: 22.04.1985
(51) Int. Cl.: A01C 15/00, A01B 49/06

(54) **An agricultural machine**
Landwirtschaftliche Maschine
Machine agricole

(30) Priority: 24.04.1984 NL 8401306
(43) Date of publication of application: 30.10.1985
(73) Proprietor: C. van der Lely N.V., NL-3155 PD Maasland (NL)
(72) Inventor: van der Lely, Cornelis, Zug (CH)
(74) Representative: Mulder, Herman

(56) References cited:
- DE-A- 3 122 331
- FR-A- 1 558 490
- FR-A- 2 300 495
- FR-A- 2 536 948
- GB-A- 1 174 055
- NL-A- 8 001 229
- US-A- 4 286 530
- US-A- 4 491 246

## Description

This invention relates to an agricultural machine comprising a frame, a hopper mounted in a fixed position directly to the frame, coupling points mounted near the front side of the hopper in a fixed position to the frame for coupling the frame to the lifting device of a prime mover, and a second hopper.

Agricultural machines of this kind are known and are used in particular for applying granular and/or powdery material to agricultural land, for example for distributing seeds or fertilizers. The FR-A-1 558 490 e.g. shows a machine of this kind. In this known machine the frame is provided with a hopper directly mounted to the frame. Coupling points being provided near the front side of the hopper in a fixed position to the frame to couple the frame with the hopper to the lifting device of prime mover. Through the intermediary of bars hingeably connected to a shaft mounted in the frame sowing elements together with second hoppers included in the sowing elements are connected hingeably to the frame.

An object underlying the present invention is to improve such an agricultural machine so that it can be effectively moved by the tractor.

According to the present invention, the second hopper is mounted in a fixed position directly to the frame and in a fixed position relative to the first hopper, with respect to the normal direction of operative travel of the machine the second hopper being situated in front of the coupling points, the first and second hopper communicating with each other to enable material to pass from the second hopper to the first hopper, the second hopper being disposed relatively to the first hopper such that when the hoppers are full, the centre of gravity of both hoppers is disposed with respect to the normal direction of operative travel of the machine on the same side of the centre of gravity of only the first hopper as are the coupling points.

According to another aspect of the present invention the second hopper is mounted in a fixed position directly to the first hopper, the first and second hopper communicating with each other to enable material to pass from the second hopper to the first hopper, the second hopper being disposed relative to the first hopper such that when the hoppers are full, the centre of gravity of both hoppers is disposed with respect to the normal direction of operative travel of the machine on the same side of the centre of gravity of only the first hopper as are the coupling points.

Because of the fact that the coupling points are mounted near the front side of the first hopper and the second hopper is situated in front of the coupling points or directly to the first hopper, the centre of gravity of both hoppers lies near the prime mover. In this way the machine with the larger hopper capacity can be borne by the prime mover in a good way. This can be particularly advantageous in the operation of the agricultural machine.

An advantageous embodiment is obtained when the hoppers communicate with each other through a duct- or channel-shaped connecting member extending between the interior of the second hopper and that of the first hopper.

A practical, effective embodiment is obtained when the part of the connecting member adjoining the first hopper has an adjustable outlet so that the position of the end of the outlet can be adjusted with respect to the bottom of the first hopper. During use of the machine, the degree of filling of the first hopper can be kept low by positioning the end of the outlet near the bottom of the first hopper. In this way, when the second hopper is full, the centre of gravity of the machine can lie very near the lifting device so that the machine may be used with smaller tractors or in combination with other machines coupled with the tractor.

In a preferred embodiment the agricultural machine can be coupled with the lifting device of a tractor or a similar vehicle through a connecting construction in the form of a pivotable quadilateral. The machine can then be effectively movable upwardly and downwardly during operation, when the agricultural machine is combined with a second agricultural machine, for example a soil cultivating machine. A practical embodiment of the agricultural machine is obtained when the second hopper is disposed above the soil cultivating machine and the first hopper is disposed behind the soil cultivating machine.

The first hopper may cooperate with a spreading mechanism or a seed drill or other sowing or planting device, the second hopper being provided for seed or fertilizer and having at least one feed connection with the first hopper so that during operation material can pass from the second hopper to the first hopper.

For a better understanding of the present invention and to show how it may be carried into effect, reference will now be made, by way of example, to the accompanying drawings, in which;
Figure 1 is a side view of agricultural equipment hitched to a tractor;
Figure 2 is a plan view of the equipment of Figure 1 taken in the direction of the arrow II in Figure 1;
Figure 3 is a rear view of the equipment of Figure 1 taken in the direction of the arrow III in Figure 1;
Figure 4 is a fragmentary sectional view, on an enlarged scale, taken on the line IV-IV in Figure 2;
Figure 5 is a plan view of further agricultural equipment hitched to a tractor; and
Figure 6 is a side view of the equipment of Figure 5 taken in the direction of the arrow VI in Figure 5.

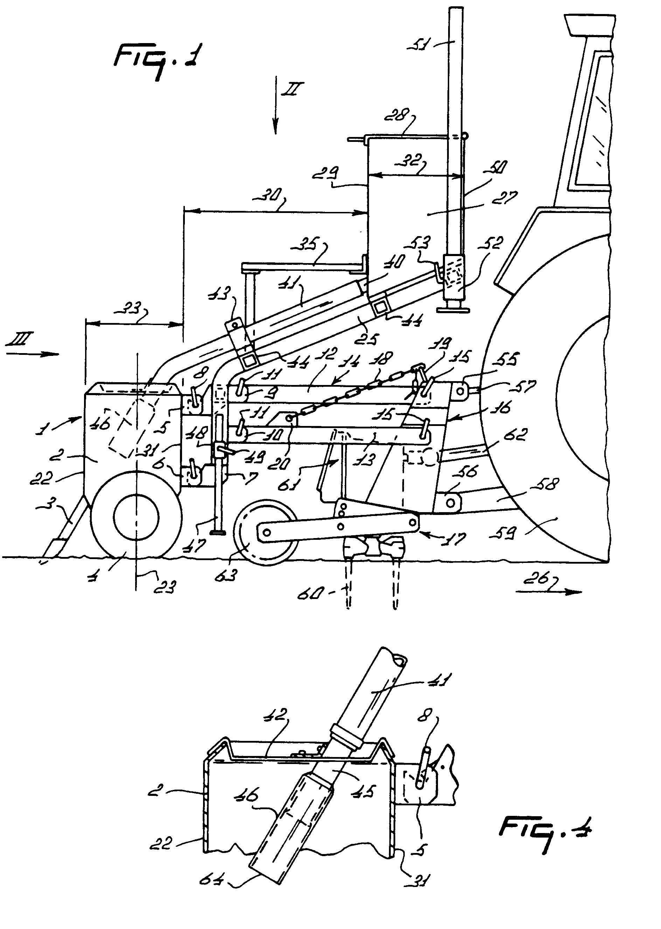

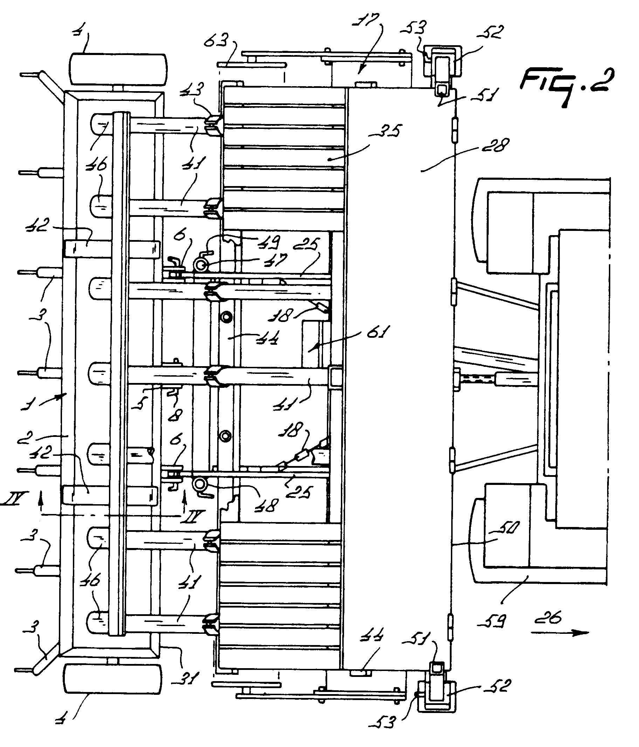

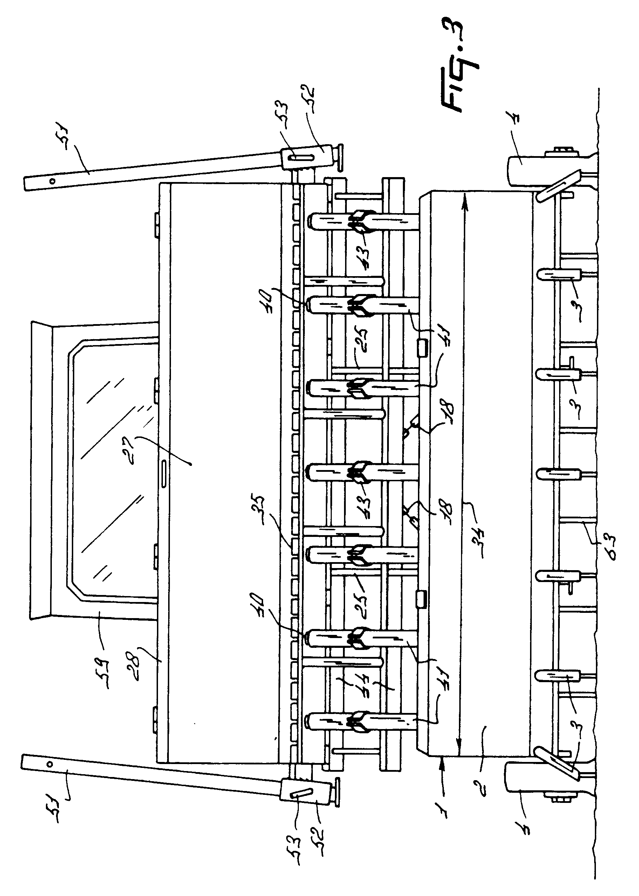

The agricultural equipment shown in Figures 1 to 4 comprises a seed drill 1. The seed drill has a first hopper 2 provided with seed pipes 3 and wheels 4. At the front, the seed drill 1 has a coupling member 5 situated midway across the width of the machine near the top. Two coupling members 6 are situated in the lower region of the hopper 2. The coupling members 5 and 6 are fastened to a carrying frame 7 by coupling pins 8. The carrying frame 7 has an upper coupling lug 9 and two lower coupling lugs 10. The coupling lugs 9 and 10 are pivotally connected by connecting pins 11 to a top arm 12 and two lower arms 13, respectively. The arms 12 and 13 comprise a pivotal construction 14 connected by connecting pins 15 to a mounting trestle 16 of a further agricultural machine 17 in the form of a soil cultivating machine. Movement limiting members in the form of chains 18 extend between the trestle 16 and the arms 13. The chains 18 extend from a connecting lug 19 of the trestle to connecting lugs 20 on the top of each lower arm 13. The carrying frame 7 comprises two carrying beams 25, which slope upwardly from the top of the carrying frame 7 towards the front, with respect to the normal direction of operative travel of the equipment, as indicated by an arrow 26. The top ends of the carrying beams 25 support a second hopper 27 of the seed drill 1. The hopper 27 is covered at the top by a pivotable cover 28. The rear wall 29 of the hopper 27 is a distance 30 ahead of the front wall 31 of the hopper 2. The distance 30 is larger than the width 32 of the hopper 27, as measured in the direction 26. The width 32 is substantially equal to the width 33 of the hopper 2. Measured transversely of the direction 26, the two hoppers have equal widths 34. A platform 35 is supported on the carrying beams 25 near the rear wall 29 of the hopper 27.

Outlet ports 40 are provided in the lower region of the rear wall 29 of the hopper 27. Connecting members 41 are connected to the outlet ports 40. The connecting members 41 comprise conduits of, preferably, flexible material; in this case they are plastics hoses. A plurality of the ports 40 are provided at equal distances from one another across the whole width 34 of the hopper 27. The connecting members 41 adjoining the ports 40 are mutually parallel. In the illustrated embodiment, there are seven connecting members 41 connected to the underside of the hopper 27. The connecting members 41 slope downwardly towards the rear from the underside of the hopper 27, with respect to the direction 26. They open into the hopper 2. The lower ends of the connecting members 41 are all connected to a cover 42 of the hopper 2, which thus serves as a connecting piece. The connecting members 41 are parallel to the frame beams 25 and lie below the platform 35. The connecting members 41 are supported by brackets 43 mounted on a transverse beam 44, which is connected to the beams 25. The lower ends 45 of the connecting members 41 extending into the hopper 2 each have an outlet part 46 which is displaceable in the lengthwise direction of the respective lower end 45. These outlet parts 46 are thus displaceable upwardly and downwardly with respect to the lower ends 45 and can be fixed at will in any one of a plurality of positions, in a manner which is not shown in detail.

The seed drill 1 has two supporting legs 47 spaced laterally of the machine one on each side of the carrying frame 7. These legs 47 are displaceable upwardly and downwardly in sleeves 48 provided on the carrying frame. A retaining bolt 49 is provided for fixing the legs 47 at will in any one of at least two vertically spaced positions with respect to the carrying frame 7. Supporting legs 51 are provided on both sides near the front wall 50 of the hopper 27. These legs 51 are displaceable in sleeves 52 fastened to the frame beams 25. The supporting legs 51 can be fixed by retaining bolts 53 at will in any one of at least two different positions with respect to the sleeve 52. When the machine stands on horizontal ground, the front wall 50 of the hopper 27 is situated substantially vertically above supporting lugs 55 and 56 of the trestle 16, by means of which the soil cultivating machine 17 can be coupled to a top lifting arm 57 and lower lifting arms 58 of a three-point lifting device of a tractor 59.

The soil cultivating machine 17 shown in this embodiment has soil cultivating members 60 which are rotatable about vertical axes and are connected by transmission members (not shown) with a gearbox 61. The gearbox 61 can be coupled by an auxiliary shaft 62 with the power take-off shaft of the tractor. The machine comprises a supporting roller 63.

When the seed drill is put into use, it is fastened by the pins 11 to the pivotal construction 14. The beams 12 and 13, are parallel to each other as viewed from the side, and the pivotal pins 11 and the connecting pins 15 lie at the corners of a quadrilateral. The resulting pivotal construction 14 supports the seed drill 1 for upwards and downwards movement and connects it to the trestle 16 of the agricultural machine 17. The trestle 16 connects the seed drill 1 to the three-point lifting device of the tractor 59.

The see drill 1 is supported by the ground wheels 4. During operation, the equipment comprising the seed drill 1 and the agricultural machine 17 is driven by the tractor 59 in the direction of the arrow 26. The soil cultivating members 60 then work the soil over a width equal to the width of the soil cultivating machine, this width, in this embodiment, being substantially equal to the width of the seed drill 1. The seed drill 1 is supported independently by the ground wheels 4 so that it can move upwardly and downwardly independently of the machine 17 by pivotal movement of the construction 14 with respect to the trestle 16 about the pivotal axes constituted by the pins 11 and 15. Since the construction 14 with the pins 11 and 15 constitutes a pivotable parallelogram structure, the seed drill 1, when moving with respect to the trestle 16, is maintained in its horizontal orientation by the pivotal construction 14.

The seed pipes 3 of the seed drill 1 guide seeds and/or other granular and/or powdery substances such as a fertilizer behind the soil cultivating machine to the ground. The material to be delivered by the seed pipes is fed from the first hopper 2 to the seed pipes 3. The hopper 2 receives material through the connecting members 41 from the second hopper 27. This hopper 27 is disposed considerably further to the front with respect to the direction 26 than the hopper 2. Therefore, the weight of the seed drill 1, particularly when the hopper 27 is full, acts at a relatively forward position close to the lifting device of the tractor. This is important to permit lifting of the combination of the seed drill 1 and the agricultural machine 17 by means of the lifting device of the tractor 59 when the cultivating members 60 have to be lifted from the ground, for example when turning at the head land of a field or for road transport of the combination. When the lifting device of the tractor is raised to lift the soil cultivating machine 17, the seed drill 1 will follow this movement because the limiting member 18 is set so that the seed drill 1 can move downwards for only a small distance with respect to the agricultural machine 17 when in the working position its tines 60 have penetrated to a greater or lesser extent into the soil. The member 18 thus causes the seed drill 1 to move upwards with the agricultural machine 17. Since the centre of gravity of the whole machine 1 is situated towards the front, lifting of the entire combination can be readily carried out. For this purpose also, the hopper 27 is positioned, as in this embodiment, as far as possible to the front so that its front wall is quite near the tractor. The front wall 50 of the hopper is substantially directly above the ends of the arms 57 and 58.

In order to have as much as possible of the weight of the seed drill 1 towards the front, the hopper 2 may be kept only partly full during operation. For this purpose the displaceable outlet part 46 can be moved down as far as possible so that its end 64 is as close as possible to the bottom of the hopper 2. Thus only the lower part of the hopper 2 contains material. The level of the material in the hopper 2 is determined by the end 64 of the outlet element 46 of each connecting member 41. With this arrangement, the combination of the machines 1 and 17 can be used with relatively lightweight tractors without the risk of them tilting rearwardly when the combination of the machines 1 and 17 is lifted. Moreover, the effort required for lifting the combination of the machines 1 and 17 need not be excessive because the centre of gravity of the machine 1, even when the hopper 27 is full, is disposed towards the front. This provides an advantageous combination with the hopper 27 above the machine 17. The rear wall 29 is positioned far towards the front and is nearer to the lifting device than is the rear wall 22 of the hopper 2. It is advantageous for the distance 30 to be larger than the width 32 or 33. The wall 29 is located far ahead of the transverse central plane 23 going through the centre of the hopper 2.

The seed drill 1 can be uncoupled from the machine 17 by removing the pins 15. In order to leave the seed drill 1 standing on the ground in an advantageous manner, the supporting legs 47 and 51 can be lowered until their lower ends bear on the ground to support the machine in cojunction with the ground wheels 4. In this lowered position and in the position shown in Figure 1 these legs can be fixed with respect to the frame.

The hopper 27 can be readily filled from the platform 35, which is also suitable for checking whether or not the material is flowing sufficiently regularly from the hopper 27 through the outlet ports 40 to the feed connecting members 41. The hopper 2, the seed pipes 3 and the wheels 4 can be disengaged from the rest of the seed drill 1 as a unit by removing the pins 8 so that the tongues 5 and 6 are disconnected from the carrying frame 7. To do this, the end portions 45 of the feed members 21 are released from the cover 42 or are removed with the cover 42 from the hopper 2. This released unit may then be coupled on its own to the lifting device of the tractor for sowing, for example, on smaller plots of land.

When the combination of the machines 1 and 17 is used with a heavy agricultural tractor, the hopper 2 can also be fully filled so that a large quantity of material can be carried. The material to be spread on the ground can then initially be supplied from the hopper 2. When the hopper 2 is almost empty, the lower part can be refilled from the hopper 27 through the feed members 41. In this way a high amount of material can be carried by the agricultural machine 1 for providing large plots of land with seeds or other material without the need for frequent re-filling.

In the embodiment shown in Figures 1 to 4, the hoppers 2 and 27 have about the same capacity as each other, but they may have different capacities. The hopper 2 may have a considerably smaller capacity than the hopper 27, for example, if the hopper 2 is smaller and the hopper 27 is larger than in the illustrated embodiment. In the illustrated embodiment, the two hoppers 2 and 27 have, as viewed on plan, equal surfaces. These too may be different.

The connection of the seed drill 1 to the quadrilateral construction 14 on the trestle 16 of the agricultural machine 17 can be established in a simple manner by hitching the machine 17 to the lifting device and by then driving it backwards beneath the hopper 27 and the frame beams 25 of the seed drill 1 supported on the legs 51 and 47 and an the wheels 4. For this purpose the legs 59 are sufficiently spaced apart and converge upwardly. In the working position the machine 1 is no broader than the machine 17.

Although in this embodiment the agricultural machine 1 is a seed drill, it could be a different agricultural machine having a hopper or other container carrying material. In the following claims, the term 'hopper' has been used to refer to all such containers, including, for example, tanks for liquid materials. For example, the machine may be a planting machine also having two hoppers, one of which, like the hopper 2, is situated near mechanisms for performing given operations, whereas more of the material to be carried is container in a second hopper, corresponding to the hopper 27. The connection between the two hoppers may also be different from the conduit feed connections 41 of this embodiment. For example, channel-shaped or duct-shaped members may be used which have a larger cross-section, or the feed connection may be a hollow, flat cylinder covering a larger width of the machine. The plurality of hollow parts 41 could all be replaced by a single, flat feed conduit covering the whole width of the hoppers 27 and 2.

When the agricultural machine is coupled with the trestle 16, the length of the limiting members 18 formed in this embodiment by a chain can be adjusted to set the limit of downwards movability of the agricultural machine 1 with respect to the agricultural machine 17.

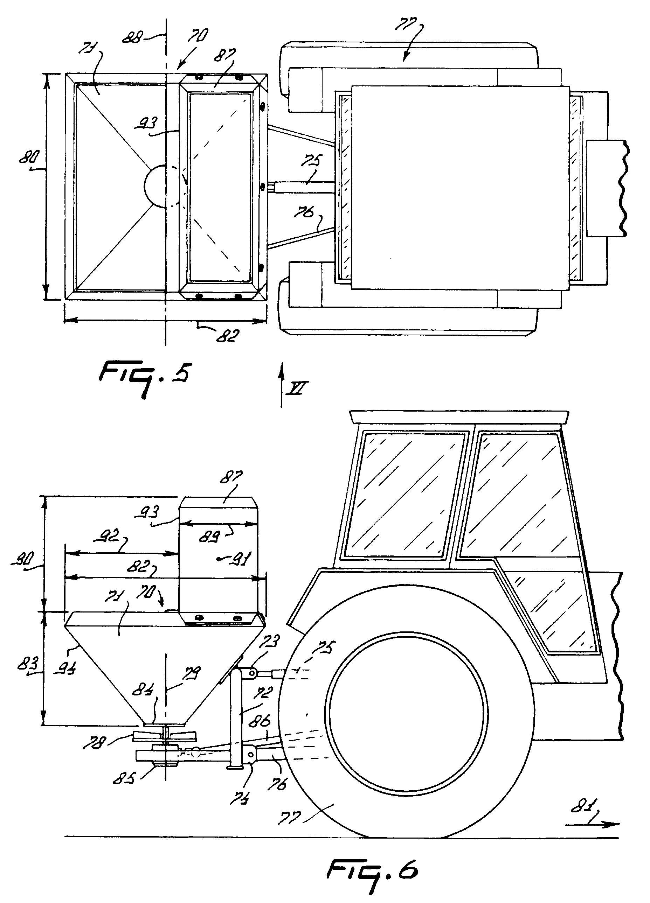

Figures 5 and 6 show an agricultural machine embodying the invention in the form of a spreader 70. This spreader comprises a first hopper 71 supported on a frame 72 provided with coupling members 73 and 74 for hitching the spreader to the top and lower lifting arms 75 and 76 of the lifting device of a tractor 77. The spreader 70 comprises a distributing member 78 which is disposed below a delivery part (not shown) of the hopper 71 and is rotatable about an upwardly extending rotary axis 79. In this embodiment the axis 79 coincides with the centre line of the hopper 71. Viewed on plan, the hopper 72 has a width 80 and a length 82 measured in the normal direction of operative travel of the spreader, as indicated by an arrow 81. The hopper 71 has a height 83 and its rectangular top tapers downwardly to the underside 84, where dosing members (not shown) may be provided for controlling the rate of flow of material from the hopper 71 to the distribution member 78. The distributing member 78 is connected by transmission members in a gearbox 85 to an auxiliary shaft 86, which can be connected to the power take-off shaft of the tractor. The spreader 70 is provided with a second hopper 87, which is fastened to the top of the first hopper 71. The hopper 87 is entirely situated ahead of a plane 88 extending transversely of the direction 81 and containing the rotary axis of the distribution member 78. Viewed on plan, the second hopper 87 occupies an area which is about half of the area of the hopper 71, as viewed on plan. The hopper 87 has a width equal to the width 80 and a length 89 measured in the direction 81 which is about half the length 82 of the hopper 71. The second hopper 87 has a height 90 which is about equal to the height 80 of the hopper 71. The hopper 87 has the same circumference throughout the height 90, in other words its walls are parallel. The underside of the hopper 87 is fully open and adjoins the open top of the hopper 71 so that the underside of the hopper 87 constitutes a connecting passage with the open top of the hopper 71. In view of its shape, the centre of gravity of the hopper 87 is approximately midway across the width 80 and the length 89 and midway up the height 90. This centre of gravity is ahead of the transverse plane 88 by a distance equal to half the distance 89.

For use, the spreader 70 is hitched to the lifting device as is shown in Figures 5 and 6. The distribution member 78 is connected with the power take-off shaft of the tractor by the auxiliary shaft 86 and the transmission in the gearbox 85. During operation the distribution member 78 is rotated about the rotary axis 79 and material is fed from the first hopper 71 to the distribution member 78 for spreading over a broad strip during travel of the spreader in the direction indicated by the arrow 81. A large amount of material can be carried in the two hoppers 71 and 87 so that a large surface can be covered with the material (such as fertilizer) without interruption. The machine is, therefore, quite suitable as an agricultural machine for spreading granular or powdery material, for example fertilizer. Since the centre of gravity 91 of the second hopper 87 is located relatively far to the front, the centre of gravity of the machine, even with the hoppers 81 and 87 full, will be relatively near the tractor. Consequently, the spreader 70 with rather high-capacity hoppers can be used on a tractor which is not too heavy. The risk of tilting backwards of the tractor with the attached agricultural machine or machines with completely filled hoppers is thus considerably reduced. In particular safe and simple operation on uneven or sloping land is possible. Moreover, the lifting device is more advantageously loaded. The location of the centre of gravity of the agricultural machine with filled hoppers is particularly advantageous because the rear wall 93 of the hopper 87 is a distance 92 from the rear wall 94 of the hopper 71. The distance 92, as in the illustrated embodiment, is preferably larger than half the length 82 of the hopper 71 so that the rear wall 93 is ahead of the transverse plane 88.

The construction embodying the invention enables relatively large amounts of material to be carried in the hoppers without disadvantageous load on the tractor by the machine or the whole combination of agricultural machines. Since the centre of gravity of the agricultural machine with the two hoppers is situated relatively near to the lifting device, the tractor need not be provided with weights at the front in order to prevent it from tilting backwards. Consequently, the wheel pressure on the ground is not increased undesirably, with the advantage that the ground is compressed as little as possible and deterioration of the soil structure is avoided. This advantage is the greater because a less heavy tractor can be used.

## Claims

1. An agricultural machine comprising a frame, a hopper (2, 71) mounted in a fixed position directly to the frame (7, 72), coupling points (9, 10, 73, 74) mounted near the front side of the hopper in a fixed position to the frame for coupling the frame to the lifting device of a prime mover, and a second hopper (27, 87), characterized in that said second hopper is mounted in a fixed position directly to the frame and in a fixed position relative to the first hopper, with respect to the normal direction of operative travel of the machine the second hopper being situated in front of the coupling points (9, 10, 73, 74), the first and second hopper (2, 27, respectively 71, 87) communicating with each other to enable material to pass from the second hopper to the first hopper, the second hopper being disposed relative to the first hopper such that when the hoppers (2, 27, respectively 71, 87) are full, the centre of gravity of both hoppers is disposed with respect to the normal direction of operative travel of the machine on the same side of the centre of gravity of only the first hopper as are the coupling points.

2. An agricultural machine comprising a frame, a hopper (2, 71) mounted in a fixed position directly to the frame (7, 72), coupling points (9, 10, 73, 74) mounted near the front side of the hopper in a fixed position to the frame for coupling the frame to the lifting device of a prime mover, and a second hopper (27, 87), characterized in that said second hopper is mounted in a fixed position directly to the first hopper, the first and second hopper (2, 27, respectively 71, 87) communicating with each other to enable material to pass from the second hopper to the first hopper, the second hopper being disposed relative to the first hopper such that when the hoppers (2, 27, respectively 71, 87) are full, the centre of gravity of both hoppers is disposed with respect to the normal direction of operative travel of the machine on the same side of the centre of gravity of only the first hopper as are the coupling points.

3. An agricultural machine as claimed in claim 1 or 2, characterized in that the second hopper (27, 91) has a width (34, 80) measured transversely of the normal direction (26, 81) of operative travel of the machine which is at least substantially equal to the width of the first hopper (2, 71).

4. An agricultural machine as claimed in claim 1, 2 or 3, characterized in that the second hopper (27, 91) is at a higher level than the first hopper (2, 71).

5. An agricultural machine as claimed in any preceding claim, characterized in that the second hopper (27, 91) is provided with an outlet (40) for providing communication with the first hopper, the outlet (40) having a smaller area than the top of the first hopper (2, 71).

6. An agricultural machine as claimed in any one of the preceding claims, characterized in that part of a conduit (41) communicating the second hopper (27) with the first hopper (2) has an adjustable outlet (46) whereby the distance between the end of the outlet (46) and the bottom of the first hopper (2) is adjustable.

7. An agricultural machine as claimed in claim 6, characterized in that the outlet (46) of the conduit (41) is displaceable in the lengthwise direction of the end (45) of the conduit (41) and is fixable thereon at will in any one of at least two different positions.

8. An agricultural machine as claimed in claim 6 or 7, characterized in that a plurality of the said conduits (41) are provided which are connected to the first hopper (2) by a common connecting piece (42) which is fastened to the first hopper (2).

9. An agricultural machine as claimed in any one of the preceding claims, characterized in that, as viewed on plan, the second hopper (27, 91) is situated substantially completely on the side of the middle part of the first hopper (2), the second hopper being nearer the tractor, during operation of the machine, than the first hopper.

10. An agricultural machine as claimed in claim 9, characterized in that, with respect to the normal direction (26, 91) of operative travel of the machine, the second hopper (27, 91) is situated entirely ahead of the front of the first hopper (2, 71), the distance (30) between the second hopper (27) and the first hopper (2), as viewed on plan, being larger than the width (32, 33) of one of the hoppers (2, 27) measured in the normal direction (26) of operative travel of the machine.

11. An agricultural machine as claimed in claim 1 or claim 1 with any one of the claims 3 to 9 inclusive characterized in that the second hopper (27) is supported by frame beams (25) provided on the frame (7) on which the first hopper (2) is mounted, the said frame (7) being provided with coupling points (9, 10) by which the machine can be coupled with the lifting device of a tractor.

12. An agricultural machine as claimed in claim 11, characterized in that the said frame (7) can be connected by a connecting construction (14) with the lifting device of a tractor, the connecting construction (14) being a pivotable quadrilateral structure which can be coupled with the lifting device of a tractor or a similar vehicle.

13. An agricultural machine as claimed in claim 12, characterized in that the connecting construction (14) can be connected to a trestle (16) of another agricultural machine (17) that can be fastened to a lifting device.

14. An agricultural machine as claimed in claim 12 or 13, characterized in that the quadrilateral construction (14) comprises limiting means (18) for limiting, in at least one direction, movement of the quadrilateral construction (14) corresponding to upwards and downwards displacement of the agricultural machine with respect to the prime mover, the limiting means (18) comprising a chain, one end of which is fastened to a member (16) which can be coupled with the lifting device of the prime mover, the length of the chain (18) between the member (16) and the frame of the agricultural machine being adjustable.

15. An agricultural machine as claimed in any one of the preceding claims, characterized in that two supporting legs are provided, disposed one on each lateral side of the second hopper (27).

16. An agricultural machine as claimed in any one of the preceding claims, characterized in that the second hopper (27, 91) has a height (90) which is substantially equal to the height (83) of the first hopper (2, 71).

17. An agricultural machine as claimed in any one of the preceding claims in combination with a second agricultural machine (17), means being provided for coupling the combination to a prime mover, characterized in that the second hopper (27) is disposed above the second agricultural machine (17), whereas the first hopper (2) is disposed behind the second agricultural machine (17), with respect to the normal direction (26) of operative travel of the combination.

18. A combination as claimed in claim 17, characterized in that the second agricultural machine is provided with a trestle (16) by which it can be coupled with the lifting device of the prime mover, the first agricultural machine (1) being connected to the trestle (16) and the fornt of the second hopper (27) being disposed substantially perpendicularly above coupling lugs (55, 56) by which the second agricultural machine (17) can be coupled with the lifting device of the prime mover.

19. An agricultural machine as claimed in claim 2 or claim 2 with any one of claims 3 or 4, characterized in that the second hopper (91) is disposed on top of the first hopper (71).

20. An agricultural machine as claimed in claim 19, characterized in that, as viewed on plan, the second hopper (91) has an area that is smaller than the area of the first hopper (71).

21. An agricultural machine as claimed in any one of the preceding claims, characterized in that the first hopper (2, 71) co-operates with a spreading mechanism and/or a seed drill, to which material is fed from the first hopper (2, 71) during operation of the machine for distributing the material on a surface.

22. An agricultural machine as claimed in claim 21, characterized in that the first hopper (71) is provided with seed pipes (3) along which material can pass from the first hopper (2) to the ground.

23. An agricultural machine as claimed in claim 21, characterized in that the first hopper (71) cooperates with a distribution member (78) which is movable about an upwardly extending axis (79) and which receives material from the first hopper (71) during operation, the member (78) distributing the material over a surface.

24. An agricultural machine as claimed in any one of the preceding claims, characterized in that connecting means is provided for connection by an auxiliary shaft to a power take-off shaft of a prime mover for actuating dosing and/or distribution mechanisms.

## Patentansprüche

1. Landwirtschaftliche Maschine mit einem Rahmen, einem lagefest unmittelbar an dem Rahmen (7, 72) montierten Behälter (2, 71), nahe dessen Vorderseite lagefest an dem Rahmen angeordneten Anschlüssen (9, 10, 73, 74) zum Anschließen des Rahmens an die Hebevorrichtung eines Zugfahrzeuges, und mit einem zweiten Behälter (27, 87), dadurch gekennzeichnet, daß der zweite Behälter lagefest unmittelbar an dem Rahmen montiert und relativ zu dem ersten Behälter lagefest angeordnet ist, wobei der zweite Behälter in bezug auf die normale Arbeitsrichtung der Maschine vor den Anschlüssen (9, 10, 73, 74) angeordnet ist, wobei der erste und der zweite Behälter (2, 27 bzw. 71, 87) zur Übergabe von Material von dem zweiten an den ersten Behälter in Verbindung stehen, und wobei der zweite Behälter relativ zu dem ersten Behälter derart angeordnet ist, daß bei gefüllten Behältern (2, 27 bzw. 71, 87) der Schwerpunkt beider Behälter, bezogen auf die normale Arbeitsrichtung der Maschine, auf derselben Seite des Schwerpunktes nur des ersten Behälters liegt wie die Anschlüsse.

2. Landwirtschaftliche Maschine mit einem Rahmen, einem lagefest unmittelbar an dem Rahmen (7, 72) montierten Behälter (2, 71), nahe dessen Vorderseite lagefest an dem Rahmen angeordneten Anschlüssen (9, 10, 73, 74) zum Anschließen des Rahmens an die Hebevorrichtung eines Zugfahrzeuges, und mit einem zweiten Behälter (27, 87), dadurch gekennzeichnet, daß der zweite Behälter lagefest unmittelbar an dem ersten Behälter angeordnet ist, wobei der erste und der zweite Behälter (2, 27 bzw. 71, 87) zur Übergabe von Material von dem zweiten an den ersten Behälter in Verbindung stehen, und wobei der zweite Behälter relativ zu dem ersten Behälter derart angeordnet ist, daß bei gefüllten Behältern (2, 27 bzw. 71, 87) der Schwerpunkt beider Behälter, bezogen auf die normale Arbeitsrichtung der Maschine, auf derselben Seite des Schwerpunktes nur des ersten Behälters liegt wie die Anschlüsse.

3. Landwirtschaftliche Maschine nach den Ansprüchen 1 oder 2,
dadurch gekennzeichnet, daß die Breite (34, 80) des zweiten Behälters (27, 91), quer zur normalen Arbeitsrichtung (26, 81) der Maschine gemessen, mindestens im wesentlichen gleich der Breite des ersten Behälters (2, 71) ist.

4. Landwirtschaftliche Maschine nach den Ansprüchen 1, 2 oder 3,
dadurch gekennzeichnet, daß sich der zweite Behälter (27, 91) auf einer größeren Höhe befindet als der erste Behälter (2, 71).

5. Landwirtschaftliche Maschine nach einem der vorhergehenden Ansprüche,
dadurch gekennzeichnet, daß der zweite Behälter (27, 91) für die Verbindung mit dem ersten Behälter einen Auslaß (40) aufweist, dessen Querschnitt kleiner ist als die Oberseite des ersten Behälters (2, 71).

6. Landwirtschaftliche Maschine nach einem der vorhergehenden Ansprüche,
dadurch gekennzeichnet, daß ein Teil einer Leitung (41), die den zweiten Behälter (27) mit dem ersten Behälter (2) verbindet, einen einstellbaren Auslaß (46) aufweist, wodurch der Abstand zwischen dem Ende des Auslasses (46) und dem Boden des ersten Behälters (2) einstellbar ist.

7. Landwirtschaftliche Maschine nach Anspruch 6,
dadurch gekennzeichnet, daß der Auslaß (46) der Leitung (41) in Längsrichtung des Endes (45) der Leitung (41) verstellbar und an der Leitung wahlweise in einer von mindestens zwei Positionen feststellbar ist.

8. Landwirtschaftliche Maschine nach den Ansprüchen 6 oder 7,
dadurch gekennzeichnet, daß eine Mehrzahl der Leitungen (41) vorgesehen ist, die mit dem ersten Behälter (2) mittels eines gemeinsamen Verbindungsstückes (42) verbunden sind, das an dem ersten Behälter (2) befestigt ist.

9. Landwirtschaftliche Maschine nach einem der vorhergehenden Ansprüche,
dadurch gekennzeichnet, daß der zweite Behälter (27, 91) in Draufsicht im wesentlichen vollständig auf der Seite des Mittelteiles des ersten Behälters (2) angeordnet ist, wobei sich der zweite Behälter in der Betriebsstellung der Maschine näher am Schlepper befindet als der erste Behälter.

10. Landwirtschaftliche Maschine nach Anspruch 9,
dadurch gekennzeichnet, daß der zweite Behälter (27, 91) in bezug auf die normale Arbeitsrichtung (26, 91) der Maschine vollständig vor der Vorderseite des ersten Behälters (2, 71) angeordnet ist, wobei der Abstand (30) zwischen dem zweiten Behälter (27) und dem ersten Behälter (2) in Draufsicht größer ist als die Breite (32, 33) eines der Behälter (2, 27), gemessen in der normalen Arbeitsrichtung (26) der Maschine.

11. Landwirtschaftliche Maschine nach Anspruch 1 allein oder in Verbindung mit den Ansprüchen 3 bis 9,
dadurch gekennzeichnet, daß der zweite Behälter (27) von Rahmenbalken (25) abgestützt ist, die an dem Rahmen (7) vorgesehen sind, an dem der erste Behälter (2) montiert ist, und daß dieser Rahmen (7) Anschlüsse (9, 10) zur Verbindung der Maschine mit der Hebevorrichtung eines Schleppers aufweist.

12. Landwirtschaftliche Maschine nach Anspruch 11,
dadurch gekennzeichnet, daß der Rahmen (7) mit der Hebevorrichtung eines Schleppers mittels einer Verbindungskonstruktion (14) zu verbinden ist, die ein Viergelenk ist, welches mit der Hebevorrichtung eines Schleppers oder eines ähnlichen Fahrzeuges zu verbinden ist.

13. Landwirtschaftliche Maschine nach Anspruch 12,
dadurch gekennzeichnet, daß die Verbindungskonstruktion (14) mit dem Anbaubock (16) einer weiteren Landmaschine (17) zu verbinden ist, welche an einer Hebevorrichtung zu befestigen ist.

14. Landwirtschaftliche Maschine nach den Ansprüchen 12 oder 13,
dadurch gekennzeichnet, daß dem Viergelenk (14) eine Begrenzungsvorrichtung (18) zugeordnet ist, um die Bewegungen des Viergelenkes (14), die den Höhenbewegungen der Landmaschine relativ zur Zugmaschine entsprechen, in mindestens einer Richtung zu begrenzen, und daß die Begrenzungsvorrichtung (18) eine Kette aufweist, deren eines Ende an einem Maschinenteil (16) befestigt ist, das an die Hebevorrichtung der Zugmaschine anzuschließen ist, wobei die zwischen dem Maschinenteil (16) und dem Rahmen der Landmaschine vorhandene Länge der Kette (18) einstellbar ist.

15. Landwirtschaftliche Maschine nach einem der vorhergehenden Ansprüche,
dadurch gekennzeichnet, daß an beiden Längsseiten des zweiten Behälters (27) je einer von zwei Trägern vorgesehen ist.

16. Landwirtschaftliche Maschine nach einem der vorhergehenden Ansprüche,
dadurch gekennzeichnet, daß die Höhe (90) des zweiten Behälters (27, 91) im wesentlichen gleich der Höhe (83) des ersten Behälters (2, 71) ist.

17. Landwirtschaftliche Maschine nach einem der vorhergehenden Ansprüche in Kombination mit einer zweiten landwirtschaftlichen Maschine (17) und mit einer Vorrichtung zum Anschließen der Kombination an eine Zugmaschine,
dadurch gekennzeichnet, daß der zweite Behälter (27) über der zweiten landwirtschaftlichen Maschine (17) angeordnet ist, wobei der erste Behälter (2) hinter der zweiten landwirtschaftlichen Maschine (17) angeordnet ist, bezogen auf die normale Arbeitsrichtung (26) der Kombination.

18. Landwirtschaftliche Maschine nach Anspruch 17,
dadurch gekennzeichnet, daß die zweite landwirtschaftliche Maschine mit einem Anbaubock (16) versehen ist, mit dem sie an die Hebevorrichtung der Zugmaschine anzuschließen ist, daß die erste landwirtschaftliche Maschine (1) mit dem Anbaubock (16) verbunden ist, und daß die Vorderseite des zweiten Behälters (27) etwa senkrecht oberhalb von Kupplungsösen (55, 56) angeordnet ist, mit denen die zweite landwirtschaftliche Maschine (17) an die Hebevorrichtung der Zugmaschine anzuschließen ist.

19. Landwirtschaftliche Maschine nach Anspruch 2 allein oder in Verbindung mit einem der Ansprüche 3 oder 4,
dadurch gekennzeichnet, daß der zweite Behälter (91) auf dem ersten Behälter (71) angeordnet ist.

20. Landwirtschaftliche Maschine nach Anspruch 19,
dadurch gekennzeichnet, daß der zweite Behälter (91) in Draufsicht eine kleinere Fläche hat als der erste Behälter (71).

21. Landwirtschaftliche Maschine nach einem der vorhergehenden Ansprüche,
dadurch gekennzeichnet, daß dem ersten Behälter (2, 71) eine Streumechanik und/oder eine Drillsaat-Einrichtung zugeordnet ist, der im Betrieb der Maschine aus dem ersten Behälter (2, 71) Gut zum Verteilen auf eine Fläche zugeführt wird.

22. Landwirtschaftliche Maschine nach Anspruch 21,
dadurch gekennzeichnet, daß der erste Behälter (71) mit Saatrohren (3) versehen ist, durch die Gut von dem ersten Behälter (2) zum Boden zu leiten ist.

23. Landwirtschaftliche Maschine nach Anspruch 21,
dadurch gekennzeichnet, daß dem ersten Behälter (71) ein Verteiler (78) zugeordnet ist, der um eine aufwärts gerichtete Achse (79) drehbar ist und im Betrieb aus dem ersten Behälter (71) Gut erhält und das Gut über eine Fläche verteilt.

24. Landwirtschaftliche Maschine nach einem der vorhergehenden Ansprüche,
dadurch gekennzeichnet, daß eine Kupplungsvorrichtung zur Verbindung mit der Zapfwelle einer Zugmaschine mittels einer Hilfswelle vorgesehen ist, um eine Dosier- und/oder Verteilmechanik anzutreiben.

## Revendications

1. Machine agricole comprenant un châssis, une trémie (2, 71) montée directement en position fixe sur le châssis (7, 72), des points d'accouplement (9, 10, 73, 74) montés en position fixe sur le châssis au voisinage de la partie frontale de la trémie pour accoupler le châssis au dispositif de levage d'un tracteur, et une deuxième trémie (27, 87), caractérisée en ce que ladite deuxième trémie est montée directement en position fixe par rapport au châssis et en position fixe par rapport à la première trémie par rapport à la direction normale de travail de la machine, la deuxième trémie étant disposée devant les points d'accouplement (9, 10, 73, 74), les deux trémies (2, 27, respectivement 71, 87) communicant entre elles pour permettre à la matière de passer à partir de la deuxième trémie dans la première trémie, la deuxième trémie étant disposée par rapport à la première trémie de telle manière que, quand les trémies (2, 27, respectivement 71, 87) sont pleines, le centre de gravité des deux trémies est disposé par rapport au sens de marche normal du travail de la machine, sur le même côté du centre de gravité de seulement la première trémie, de même que le sont les points d'accouplement.

2. Machine agricole comprenant un châssis, une trémie (2, 71) montée en position fixe directement sur le châssis (7, 72), des points d'accouplement (9, 10, 73, 74) montés au voisinage de la partie frontale de la trémie en position fixe sur le châssis pour accoupler le châssis au dispositif de levage d'un tracteur, et une deuxième trémie (27, 87), caractérisée en ce que ladite deuxième trémie est montée en position fixe par rapport à la première trémie, les deux trémies (2, 27, respectivement 71, 87) communicant entre elles pour permettre à la matière de passer à partir de la deuxième trémie dans la première trémie, la deuxième trémie étant disposée par rapport à la première trémie de telle manière que, quand les trémies (2, 27, respectivement 71, 87) sont pleines, le centre de gravité des deux trémies est disposé par rapport au sens de marche normal du travail de la machine, sur le même côté du centre de gravité de seulement la première trémie, de même que le sont les points d'accouplement.

3. Machine agricole selon la revendication 1 ou 2, caractérisée en ce que la deuxième trémie (27, 91) a une largeur (34, 80) mesurée transversalement au sens normal (26, 81) de marche du travail de la machine, qui est au moins sensiblement égale à la largeur de la première trémie (2, 71).

4. Machine agricole selon les revendications 1, 2 ou 3, caractérisée en ce que la deuxième trémie (27, 91) est à un niveau plus haut que la première trémie (2, 71).

5. Machine agricole selon l'une quelconque des revendications précédentes, caractérisée en ce que la deuxième trémie (27, 91) est munie d'un orifice de sortie (40) pour réaliser une communication avec la première trémie, l'orifice de sortie (40) ayant une superficie plus petite que le sommet de la première trémie (2, 71).

6. Machine agricole selon l'une quelconque des revendications précédentes, caractérisée en ce qu'une partie d'un conduit (41) faisant communiquer la deuxième trémie (27) avec la première trémie (2) a un orifice de sortie (46) réglable permettant d'ajuster la distance entre l'extrémité de l'orifice de sortie (46) et le fond de la première trémie (2).

7. Machine agricole selon la revendication 6, caractérisée en ce que l'orifice de sortie (46) du conduit (41) peut être déplacé dans le sens longitudinal de l'extrémité (45) du conduit (41) et être fixé à volonté sur celle-ci dans n'importe laquelle d'au moins deux positions différentes.

8. Machine agricole selon la revendication 6 ou 7, caractérisée en ce qu'une pluralité desdits conduits (41) sont prévus, qui sont reliés à la première trémie (2) par une pièce de raccordement commune (42) qui est attachée à la première trémie (2).

9. Machine agricole selon l'une quelconque des revendications précédentes, caractérisée en ce que la deuxième trémie (27, 91) telle que vue en plan, est située pratiquement complètement sur le côté de la partie médiane de la première trémie (2), la deuxième trémie étant plus proche du tracteur, pendant le fonctionnement de la machine, que la première trémie.

10. Machine agricole selon la revendication 9, caractérisée en ce que, par rapport au sens normal de marche (26, 91) pour le travail de la machine, la deuxième trémie (27, 91) est située entièrement en avant de la face antérieure de la première trémie (2, 71), la distance (30) entre la deuxième trémie (27) et la première trémie (2), telle que vue en plan, étant plus grande que la largeur (32, 33) d'une des trémies (2, 27) mesurée dans le sens normal de marche (26) pour le travail de la machine.

11. Machine agricole selon la revendication 1 ou la revendication 1 en combinaison avec l'une quelconque des revendications 3 à 9 inclus, caractérisée en ce que la deuxième trémie (27) est supportée par des poutres (25) du châssis prévues sur le châssis (7), sur lesquelles est montée la première trémie (2), ledit châssis (7) étant muni de points d'accouplement (9, 10) par lesquels la machine peut être accouplée au dispositif de levage d'un tracteur.

12. Machine agricole selon la revendication 10, caractérisée en ce que ledit châssis (7) peut être relié par une construction (14) de connexion avec le dispositif de levage d'un tracteur, la construction de connexion (14) étant une structure articulée quadrilatérale qui peut être accouplée au dispositif de levage d'un tracteur ou d'un véhicule similaire.

13. Machine agricole selon la revendication 12, caractérisée en ce que la construction de connexion (14) peut être reliée à un chevalet (16) d'une autre machine agricole (17) pouvant être attachée à un dispositif de levage.

14. Machine agricole selon la revendication 12 ou 13, caractérisée en ce que la construction quadrilatérale (14) comprend des moyens limiteurs (18) pour limiter, dans au moins un sens, le mouvement de la construction quadrilatère (14) correspondant au déplacement, vers le haut et vers le bas, de la machine agricole par rapport au tracteur, les moyens limiteurs (18) comprenant une chaîne dont une extrémité est attachée à un élément (16) pouvant être accouplé au dispositif de levage du tracteur, la longueur de la chaîne (18) entre l'élément (16) et le châssis de la machine agricole étant réglable.

15. Machine agricole selon l'une quelconque des revendications précédentes, caractérisée en ce que deux jambes de support sont prévues, disposées chacune sur un côté latéral de la deuxième trémie (27).

16. Machine agricole selon l'une quelconque des revendications précédentes, caractérisée en ce que la deuxième trémie (27, 91) a une hauteur (90) sensiblement égale à la hauteur (83) de la première trémie (2, 71).

17. Machine agricole selon l'une quelconque des revendications précédentes, en combinaison avec une deuxième machine agricole (17), des moyens étant prévus pour atteler la combinaison à un tracteur, caractérisée en ce que la deuxième trémie (27) est disposée au dessus de la deuxième machine agricole (17), tandis que la première trémie (2) est disposée derrière la deuxième machine agricole (17) par rapport au sens normal de marche (26) pour le travail de la combinaison.

18. Combinaison selon la revendication 17, caractérisée en ce que la deuxième machine agricole est pourvue d'un chevalet (16) par lequel elle peut être couplée au dispositif de levage du tracteur, la première machine agricole (1) étant reliée au chevalet (16) et l'avant de la deuxième trémie (27) étant disposé sensiblement perpendiculairement au dessus de pattes d'accouplement (55, 56) par lesquelles la deuxième machine agricole (17) peut être couplée au dispositif de levage du tracteur.

19. Machine agricole selon la revendication 2 ou la revendication 2 en combinaison avec l'une quelconque des revendications 3 ou 4, caractérisée en ce que la deuxième trémie (91) est disposée sur le sommet de la première trémie (71).

20. Machine agricole selon la revendication 19, caractérisée en ce que, telle que vue en plan, la deuxième trémie (91) a une surface plus petite que celle de la première trémie (71).

21. Machine agricole selon l'une quelconque des revendications précédentes, caractérisée en ce que la première trémie (2, 71) coopère avec un mécanisme épandeur et/ou un semoir auquel de la matière est fournie partir de la première trémie (2, 71) pendant le fonctionnement de la machine pour répartir la matière sur une surface.

22. Machine agricole selon la revendication 21, caractérisée en ce que la première trémie (71) est munie de tuyaux (3) pour semences, par lesquels la matière peut passer de la première trémie (2) au sol.

23. Machine agricole selon la revendication 21, caractérisée en ce que la première trémie (71) coopère avec un organe distributeur (78) mobile autour d'un axe (79) s'étendant vers le haut et qui reçoit de la matière venant de la première trémie (71) au cours du travail, l'organe (78) distribuant de la matière sur une surface.

24. Machine agricole selon l'une quelconque des revendications précédentes, caractérisée en ce qu'un moyen de liaison est prévu pour la liaison, par un arbre auxiliaire, à l'arbre de prise de force d'un tracteur, pour actionner des mécanismes doseurs et/ou distributeurs.
